**Europäisches Patentamt**

**European Patent Office**

**Office européen des brevets**

(19)

(11) Veröffentlichungsnummer: **0 091 095**
**B1**

(12) **EUROPÄISCHE PATENTSCHRIFT**

(45) Veröffentlichungstag der Patentschrift:
**24.06.87**

(51) Int. Cl.⁴: **F 24 D 11/02**, F 24 J 3/00,
F 25 B 17/08, F 25 B 29/00

(21) Anmeldenummer: **83103198.4**

(22) Anmeldetag: **30.03.83**

(54) **Speicherheizanlage mit Sorptionsspeicher.**

(30) Priorität: **05.04.82 DE 3212608**

(43) Veröffentlichungstag der Anmeldung:
**12.10.83 Patentblatt 83/41**

(45) Bekanntmachung des Hinweises auf die Patenterteilung:
**24.06.87 Patentblatt 87/26**

(84) Benannte Vertragsstaaten:
**AT BE CH DE FR GB IT LI NL SE**

(56) Entgegenhaltungen:
**EP - A - 0 026 257**
**DE - A - 2 247 211**
**GB - A - 2 083 905**
**US - A - 3 973 552**

(73) Patentinhaber: **Schiedel GmbH & Co., Lerchenstrasse 9,
D-8000 München 50 (DE)**

(72) Erfinder: **Betz, Gottfried, Dipl. Phys.,
Schönebergstrasse 13, D-1000 Berlin 41 (DE)**
Erfinder: **Januschkowetz, Dipl. Phys., Gluckstrasse 3,
D-8200 Rosenheim (DE)**
Erfinder: **Maier-Laxhuber, Peter, Dr.,
Saumweberstrasse 14, D-8000 München 60 (DE)**
Erfinder: **Wipf, Helmut, Dipl. Phys.,
Donauschwabenstrasse 1, D-8057 Echingen (DE)**
Erfinder: **Alefeld, Georg, Dipl. Phys.,
Josef-Raps-Strasse 3, D-8000 München 40 (DE)**

(74) Vertreter: **Dr. Elisabeth Jung Dr. Jürgen Schirdewahn
Dipl.-Ing. Claus Gernhardt, P.O.
Box 40 14 68 Clemensstrasse 30,
D-8000 München 40 (DE)**

## Beschreibung

Eine Heizungsanlage mit den Merkmalen des Oberbegriffs von Anspruch 1 ist aus der EP-A-26 257 bekannt.

Ein bei Speicherheizungsanlagen noch nicht zufriedenstellend gelöstes Problem ist die Langzeitspeicherung von Wärmeenergie. Es wäre z.B. erwünscht, die in der Elektrizitätswirtschaft während des Wochenendes zur Verfügung stehende, überschüssige Grundlastenergie für einen Verbrauch während der anschliessenden Woche speichern zu können. Bei Keramik- und anderen Feststoffspeichern lässt sich mit tragbarem Aufwand keine ausreichende Wärmeisolation erreichen, wenn diese Speicher mit hohen Speichertemperaturen betrieben werden, während andererseits bei niedrigen Speichertemperaturen der Raumbedarf prohibitiv gross wird. Bei Sorptionsspeichern, in denen die Wärme in latenter Form gespeichert werden kann, lässt sich zwar eine zufriedenstellende Wärmeisolation leichter verwirklichen; diese Art der Speicherung hat jedoch den Nachteil, dass die gespeicherte Wärme nicht ohne weiteres wieder abrufbar ist. Bei einem Sorptionsspeicher muss nämlich das während der Beladungsphase ausgetriebene und kondensierte Arbeitsfluid zum Freisetzen der Wärme im Sorptionsspeicher wieder verdampft werden, was gewöhnlich – und auch bei der bekannten Heizungsanlage der EP-A-26 257 – durch «kostenlose» Energie, wie Sonnenwärme oder Umgebungswärme, erfolgt. Zu dieser «kostenlosen» bzw. mindestens «minderwertigen» Energie gehören auch Energieträger höherer Temperaturen, wie z.B. Küchenabluft oder Rauchgas. Steht diese Energie nicht zur Verfügung, so kann auch die in einem Sorptionsspeicher gespeicherte Wärme nicht nutzbar gemacht werden.

Bei der bekannten Heizungsanlage der EP-A-26 257 wird ferner die primäre minderwertige Energie über ein vom Arbeitsfluid, insbesondere $H_2O$, gesondertes Wärmetauschfluid in den ausserhalb des Sorptionsspeichers angeordneten Verdampfer eingebracht. Sonderfälle, bei denen das Wärmetauschfluid selbst originär Träger minderwertiger Energie ist, wie etwa die genannte Küchenabluft oder das genannte Rauchgas, lassen sich nicht verallgemeinern und sind auch als Wärmetauschfluide nur bedingt geeignet. Als Wärmetauschfluide werden beispielsweise zweckmässig Flüssigkeiten eingesetzt.

Der vorliegenden Erfindung liegt die Aufgabe zugrunde, eine mit einem Sorptionsspeicher arbeitende Speicherheizungsanlage anzugeben, bei der eine Langzeitspeicherung von Energie ohne wesentliche Verluste möglich ist und die gespeicherte Energie jederzeit abgerufen werden kann.

Diese Aufgabe wird bei der eingangs genannten Speicherheizungsanlage durch die im Kennzeichen des Anspruchs 1 angegebenen Merkmale gelöst.

Weiterbildungen und vorteilhafte Ausgestaltungen der erfindungsgemässen Speicherheizungsanlage sind Gegenstand von Unteransprüchen.

Die Speicherheizungsanlage gemäss der Erfindung erlaubt zunächst ebenso wie die bekannte Heizungsanlage der EP-A-26 257 eine Langzeitspeicherung von Energie insofern, als z.B. die während eines Wochenendes zur Verfügung stehende elektrische Grundlastenergie durch Aufheizen des Sorptionsspeichers gespeichert und in der anschliessenden Woche nutzbar gemacht werden kann. Die gespeicherte spezifische und Absorptionswärme lässt sich erfindungsgemäss jederzeit und in variabler Menge freisetzen, also z.B. auch nachts oder zu Zeiten sehr niedriger Aussentemperatur. Gewünschtenfalls kann die Speicherheizungsanlage auch zur Kälteerzeugung verwendet werden und im Winter zur Raumheizung u.dgl. sowie zur Warmwasserbereitung und im Sommer zur Warmwasserbereitung und zur Raumkühlung z.B. unter Ausnutzung des Zentralheizungssystems verwendet werden.

Die Speicherheizungsanlage gemäss der Erfindung ermöglicht es dabei, im grösstmöglichen Umfang minderwertige Energie nutzbar zu machen. Soweit diese nicht ausreicht, kann über die Zusatzheizvorrichtung höherwertige Energie eingesetzt werden. Darüber hinaus werden Wärmeverluste zwischen einem primärseitigen Wärmetauschfluid und dem Arbeitsfluid vermieden, das zugleich als ein Wärmetauschfluid Anwendung findet. Dieses Wärmetauschfluid ist dabei vorteilhaft weiterhin Wasser oder eine andere geeignete Flüssigkeit.

Bei Absorptionsvorrichtungen mit flüssigen Absorberstoffen und ohne Verwendung eines Sorptionsspeichers ist an sich bereits der Verdampfer des flüssigen Arbeitsfluids als Umlaufverdampfer ausgebildet, der eine Verdampferkammer aufweist, in der ein Flüssigkeitssprühkopf angeordnet ist, dessen versprühte Flüssigkeit teilweise in den dampfförmigen Zustand überführt wird und in diesem Zustand in einer Gemeinsamen Kammer von ebenfalls versprühtem Absorberfluid frei kommunizierend absorbiert werden kann. Der nicht in den dampfförmigen Zustand überführte Anteil des Arbeitsfluides wird über eine Flüssigkeitsausgangsleitung in den Kreislauf zurückgeführt. Zur Überführung der versprühten Flüssigkeit in den Dampfzustand wird innerhalb der gemeinsamen Kammer eine von einem gesonderten Wärmetauschfluid beaufschlagte Wärmetauscheinrichtung benötigt. Eine derartige Vorrichtung ist aus der DE-A-2 247 211 an sich bekannt. Im Rahmen der Erfindung bringt demgegenüber das zugleich als Wärmetauschfluid dienende Arbeitsfluid bereits die primärseitig eingeleitete Wärme minderwertiger und, soweit erforderlich, zusätzlich höherwertiger Art als spezifische Wärme mit.

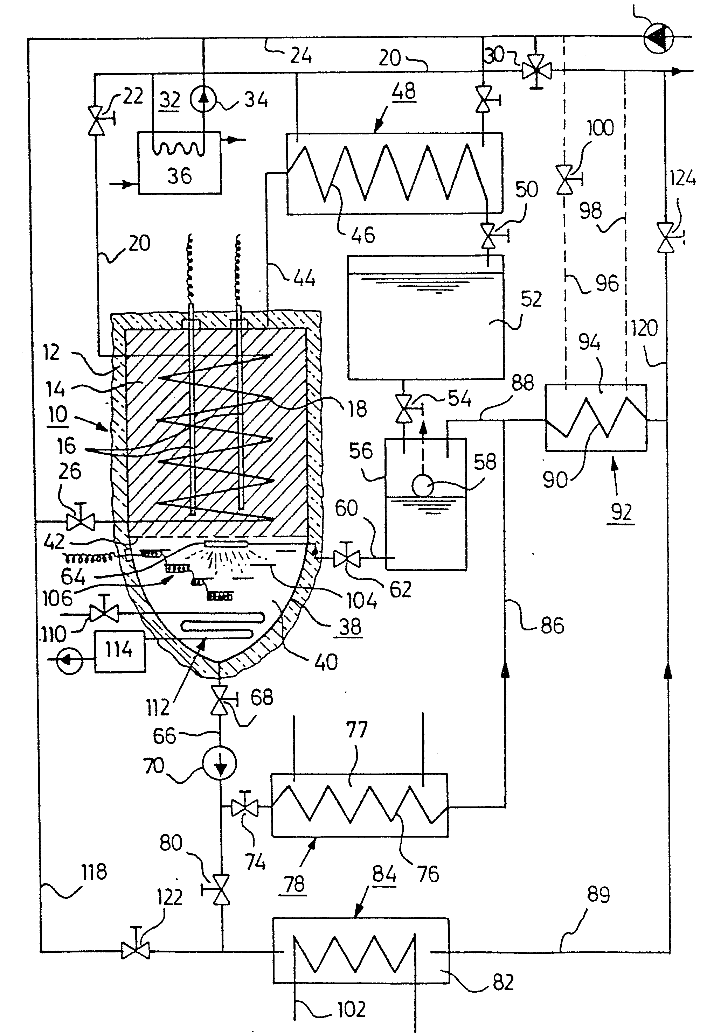

Im folgenden wird die Erfindung unter Bezugnahme auf die Zeichnung näher erläutert, deren einzige Figur eine schematische Darstellung einer bevorzugten Ausführungsform der Speicherheizungsanlage gemäss der Erfindung darstellt.

Die dargestellte Speicherheizungsanlage enthält einen Sorptionsspeicher 10, der mit einer Wärmeisolation 12 umgeben ist und ein Absorptionsmittel 14 enthält, welches vorteilhafterweise aus Zeolith besteht. Im Absorptionsmittel 14 und in gutem Wärmekontakt mit diesem sind eine Heizvorrichtung 16, z.B., wie schematisch dargestellt, in Form einer elektrischen Widerstandsheizung, und ein Wärmetauscherelement 18 angeordnet, welches in einem Wärmeträgerkreislauf liegt, der beispielsweise zu einer Warmwasserheizungsanlage gehören kann und eine Vorlaufleitung 20 mit einem Ventil 22, sowie eine Rücklaufleitung 24 mit einem Ventil 26 und einer Umwälzpumpe 28 enthält. Vor- und Rücklaufleitung sind, wie üblich, durch ein Dreiwegeventil 30 verbunden. Zwischen dem Wärmetauscherelement 18 und dem Dreiwegeventil 30 ist zwischen die Vorlauf- und die Rücklaufleitung ausserdem ein Nebenkreislauf 32 geschaltet, der eine Umwälzpumpe 34 und einen Wärmetauscher 36 zur Warmwasserbereitung enthält.

An den Sorptionsspeicher 10 ist unten ein Verdampfer 38 angebaut, der eine Kammer 40 aufweist, die über eine dampfdurchlässige Trennwand 42 grossflächig mit dem das Absorptionsmittel 14 enthaltenden Raum des Sorptionsspeichers 10 in Verbindung steht.

Der Sorptionsspeicher 10 ist am oberen Ende mit einer Auslassleitung 44 für ausgetriebenes, gasförmiges Arbeitsfluid, das vorteilhafterweise $H_2O$ ist, versehen. Die Auslassleitung 44 ist an ein Wärmetauscherelement 46 eines Kondensators 48 angeschlossen, dessen Auslass über ein Ventil 50 mit einem Vorratsgefäss 52 für flüssiges Arbeitsfluid verbunden ist. Das Vorratsgefäss 52 hat einen Auslass, der über eine ein Ventil 54 enthaltende Leitung mit einem Gefäss 56 verbunden ist, das eine zum Nachfüllen und Mischen von Arbeitsfluid dienende Einspeisungsvorrichtung bildet. Das Ventil 54 wird durch einen Niveaufühler, z.B. einem Schwimmer 58 im Gefäss 56 so gesteuert, dass das Niveau des im Gefäss 56 enthaltenen flüssigen Arbeitsfluids im wesentlichen konstant bleibt. Das Gefäss 56 ist mit einer Auslassleitung 60 versehen, die ein Ventil 62 enthält und zu einem Sprühkopf 64 führt, der im oberen Teil der Kammer 40 des Verdampfers 38 angeordnet ist.

Die Kammer 40 des Verdampfers 48 ist an ihrem unteren, trichterartig gestalteten Ende mit einer Auslassleitung 66 verbunden, die ein Ventil 68 enthält, und zum Einlass einer Pumpe 70 führt. Der Auslass der Pumpe 70 ist über ein Ventil 74 mit einem Wärmetauscherelement 76 eines Wärmetauschers 78 verbunden und über ein Ventil 80 mit einem Wärmetauscherelement 82 eines Wärmetauschers 84. Der Ausgang des Wärmetauscherelements 76 ist über eine Leitung 86 mit einem Arbeitsfluideinlass 88 das Gefässes 56 verbunden. Der Auslass des Wärmetauscherelements 82 ist über eine Leitung 89 mit dem Eingang eines Wärmetauscherelements 90 eines Wärmetauschers 92 verbunden. Der Ausgang des Wärmetauscherelements 90 ist ebenfalls an die Arbeitsfluideinlassleitung 88 angeschlossen.

Ein zweites Wärmetauscherelement 94 des Wärmetauschers 92 ist über gestrichelt dargestellte Leitungen 96, 98, von denen die erstere ein Ventil 100 enthält, mit der Rücklaufleitung 24 bzw. der Vorlaufleitung 20 verbunden.

Der Wärmetauscher 78 hat noch ein weiteres Wärmetauscherelement 77.

Der Wärmetauscher 84 ist mit einer als Wärmetauscherelement dargestellten Heizvorrichtung 102 verbunden, so dass dem Wärmetauscher 84 Wärme zugeführt werden kann, die durch elektrische Energie oder durch Verbrennen von Öl, Gas, Holz, Kohle, Papier oder Abfällen erzeugt wird.

Der Verdampfer 38 enthält in der Kammer 40 Prallplatten oder Schikanen 104. Die Schikanen 104 können ebenfalls heizbar sein, z.B. mittels einer elektrischen Heizvorrichtung 106.

Gemäss einer speziellen Ausgestaltung der Erfindung können im Verdampferraum 40 ein Wärmetauscherelement 112 oder mehrere Wärmetauscherelemente vorgesehen sein, die die Funktionen der Wärmetauscher 78, 84 bzw. 92 übernehmen. Diese Wärmetauscherelemente sollen entleerbar sein, damit bei den hohen Temperaturen während des Austreibens keine übermässigen Drücke entstehen. Hierzu dienen ein Absperrventil 110 und ein Sammelgefäss 114.

Die oben beschriebenen Elemente sind nicht alle für den Betrieb der Speicherheizungsanlage notwendig, wie im folgenden erläutert werden wird.

Die beschriebene Speicherheizungsanlage kann wie folgt betrieben werden:

Wenn billige elektrische Energie zur Verfügung steht, z.B. während des Wochenendes und gegebenenfalls während mancher Nachtstunden, wird die Heizvorrichtung 16 eingeschaltet und die im Sorptionsspeicher 10 erzeugte Wärme zum Austreiben von Arbeitsfluid, also Wasser, aus dem Absorptionsmittel, also dem Zeolith, verwendet. Das ausgetriebene, verdampfte Wasser wird im Kondensator 48 kondensiert und gibt dabei seine Kondensationswärme ab, die in der Zentralheizungsanlage und/oder im Brauchwasser-Wärmetauscher 36 nutzbar gemacht werden kann. Das kondensierte Wasser fliesst in die Vorratsgefässe 52 bzw. 56. Die Ventile 62 und 68 sind vorerst noch geschlossen und die Pumpe 70 ist ausser Betrieb.

Beim Austreiben des Arbeitsfluids wird das Absorptionsmittel 14 erwärmt. Die auf diese Weise gespeicherte spezifische Wärmeenergie kann bei Bedarf über das Wärmetauscherelement 18 entnommen und zu Heizzwecken und/oder zur Warmwasserbereitung verwendet werden. Durch das Austreiben wird ausserdem latente Wärmeenergie (Desorptionswärme) im Absorptionsmittel 14 gespeichert. Diese latente Wärmeenergie lässt sich praktisch verlustfrei über beliebige Zeiten «aufbewahren».

Die im Sorptionsspeicher 10 gespeicherte latente Wärme wird erst dann abgerufen, wenn die Kondensationswärme 48 aus dem Kondensator und die spezifische Wärme aus dem Sorptionsspeicher 10 verbraucht sind bzw. nicht mehr ausreichen, um den Wärmebedarf zu decken. Hierzu wird das Ventil 68 geöffnet, die Pumpe 70 in Betrieb gesetzt, das Ventil 74 geöffnet und durch geregeltes Öffnen des Ventiles 62 die benötigte Menge an flüssigem Arbeitsfluid (Wasser) in den Verdampfer 38 eingeleitet und durch den Sprühkopf 64 versprüht. Ein Teil des versprühten Wassers verdampft und wird vom Absorptionsmittel 14 (Zeolith) absorbiert, wobei Absorptionswärme entsteht, die über das Wärmetauscherelement 18 entnommen werden kann. Das flüssige Arbeitsfluid wird im Verdampfer 38 durch die Verdampfungswärme abgekühlt.

Wenn Sonnenwärme, Umgebungswärme oder Abwärme zur Verfügung stehen, ist das Ventil 74 offen und das abgekühlte flüssige Arbeitsfluid wird durch diese «kostenlose» Wärme, die dem Wärmetauscherelement 77 zugeführt wird, im Wärmetauscher 78 erwärmt, bevor es über die Leitung 86 wieder in das Gefäss 56 eingespeist wird. Während des überwiegenden Teiles der Betriebsdauer der Speicherheizungsanlage wird man in der beschriebenen Weise arbeiten können, d.h. die zum Verdampfen des Arbeitsfluids im Verdampfer 38 erforderliche Wärme durch «kostenlose» Wärme über den Wärmetauscher 78 decken können.

Um einen Betrieb der Speicherheizungsanlage auch dann sicherzustellen, wenn keine kostenlose Wärme zur Verfügung steht, ist der Wärmetauscher 84 mit der Heizvorrichtung 102 vorgesehen, die mit hochwertiger Wärme (Elektrizität, fossile Wärme) und/oder mit Wärme, die durch Verbrennen von Abfällen und dergleichen erzeugt wird, gespeist wird. In diesem Falle wird dann das Ventil 74 geschlosssen und das Ventil 80 wird geöffnet, so dass das Arbeitsfluid nun durch den Wärmetauscher 82 und die Leitung 89 zirkuliert. Der Wärmetauscher 92 soll vorerst ausser Betracht bleiben. Durch die Zusatzheizung in Form der Heizvorrichtung 102 ist also ein voller Betrieb der Heizungsanlage unter allen Umständen gewährleistet.

Die Wärmetauscher 78 und 84 liegen in getrennten, parallelen Zweigen des durch den als Umlaufverdampfer arbeitenden Verdampfer 38 führenden Arbeitsfluidkreislaufes, um Wärmeverluste zu vermeiden, die bei einer Reihenschaltung der Wärmetauscher 78 und 84, die ja im allgemeinen alternierend arbeiten, zu vermeiden.

Anstelle der zusätzlichen Heizvorrichtung 102, die ein wesentliches Merkmal der vorliegenden Speicherheizungsanlage darstellt, oder zusätzlich zu dieser kann auch im Verdampfer 38 selbst mindestens eine weitere Heizvorrichtung vorgesehen sein, um beim Fehlen von kostenloser Wärme jederzeit eine ausreichende Menge an Arbeitsfluid verdampfen zu können. Diese zusätzliche Heizvorrichtung kann aus der elektrischen Heizvorrichtung 106 der Schikanen 104 oder z.B. dem Wärmetauscherelement 112 bestehen. Wenn die Heizvorrichtung(en) im Verdampfer 38 die einzigen Heizvorrichtungen für das umgewälzte Arbeitsfluid sind, kann der Auslass der Pumpe 70 direkt mit der Einlassleitung 88 des Gefässes 56 verbunden sein.

Die beschriebene Speicherheizungsanlage lässt sich im Sommer in vorteilhafter Weise auch zur Raumkühlung verwenden. Das über den Sprühkopf 64 in den Verdampfer 38 eingespritzte Arbeitsfluid wird ja durch die Verdampfung abgekühlt. Diese Kälte kann durch den Wärmetauscher 92 nutzbar gemacht werden, der mit dem Wärmetauscher 84 in Reihe liegt, dessen Heizvorrichtung 102 dann selbstverständlich ausser Betrieb ist. Die Sekundärseite des Wärmetauschers 92, also das Wärmetauscherelement 94 ist über die Leitungen 96 und 98 mit dem Wasserkreislauf der Zentralheizungsanlage verbunden, deren Radiatoren und dergleichen nun zu Kühlzwecken verwendet werden. Beim Kühlen wird das Ventil 100 geöffnet und das Dreiwegeventil 30 so eingestellt, dass die Umwälzpumpe 28 nun das durch die nicht dargestellen Radiatoren zirkulierende Wasser durch den Wärmetauscher 92 pumpt, so es abgekühlt wird. Man kann auf diese Weise also eine angenehme, geräuschlose Kühlung aller Räume bewirken, in denen sich Radiatoren der Zentralheizungsanlage befinden. Die Wärme aus dem Sorptionsspeicher dient dann im Wärmetauscher 36 zur Warmwasserbereitung.

Als Wärmeträger für das Heizen und/oder Kühlen kann selbstverständlich auch Luft verwendet werden. Die Wärmetauscherelemente 18, 48 und 94 sind dann für einen Wärmetausch mit vorbeigeführter Luft ausgebildet. Auch das Wärmetauscherelement 76 kann in direktem Wärmeaustausch mit vorbeigeführter warmer Luft (z.B. Abluft) stehen und das Wärmetauscherelement 102 kann aus einem Brennkammerraum bestehen.

Für eine Heizungsanlage ist es wichtig, dass der Betrieb auch bei Aussentemperaturen unter 0 °C gewährleistet ist. Dies wird bei der beschriebenen Heizungsanlage, die Wasser als Arbeitsfluid verwendet, dadurch erreicht, dass dem als Arbeitsfluid umgewälzten Wasser ein den Gefrierpunkt erniedrigendes Mittel, z.B. ein Salz zugesetzt wird. Es genügen dabei schon relativ kleine Salzkonzentrationen, um den Gefrierpunkt des Wassers im Kreislauf 40 – 66 – 68 – 70 – 74 – 78 soweit herabzusetzen, dass ein Einfrieren verhindert wird.

An die Stelle des einzigen Sorptionsspeichers 10 können mehrere parallelschaltbare kleinere Sorptionsspeicher treten um einen wirtschaftlicheren Teillastbetrieb zu ermöglichen. Ein ähnlicher Effekt kann auch dadurch erzielt werden, dass man die Heizelemente 16 getrennt oder abschnittsweise einschaltbar macht, so dass nach Wunsch auch nur ein Teil des im Speicher enthaltenen Absorptionsmittels erhitzt und dadurch vom Arbeitsfluid befreit werden kann. Insbesondere lassen sich dadurch diejenigen Bereiche bevorzugt ausheizen, die am stärksten Wasserdampf absorbiert haben. Da der Absorptionsbereich vom Verdampfer aus in die Zeolithschüttung fortschreitet, kann man hierzu bei der in der Figur gezeichneten Geometrie die Heizelemente in Abschnitte unterteilen, die getrennt ansteuerbar sind. Andererseits ist es auch zweckmässig, die Heizelemente horizontal in verschiedenen Höhen über dem Verdampfer anzuordnen. Auf diese Weise kann man durch getrennte Ansteuerung der Heizelemente vorzugsweise die Bereiche, die Wasserdampf absorbiert haben, erwärmen.

Um einen Notheizungsbetrieb bei Ausfall, Reparatur oder Wartung der eigentlichen Heizungsanlage zu ermöglichen, kann der Wärmetauscher 84 mit der Zusatzheizvorrichtung über Leitungen 118, 120, die Absperr-Ventile 122 bzw. 124 enthalten, mit der Rücklauf- bzw. der Vorlaufleitung 24 bis 20 verbunden und damit in den Warmwasserkreislauf der Warmwasser-Zentralheizungsanlage geschaltet werden.

## Patentansprüche

1. Speicherheizungsanlage mit einem auf dem Absorptionskreisprozess basierenden Arbeitsfluidkreislauf, der einen Absorberfeststoff, insbesondere Zeolith, und als Arbeitsfluid eine verdampfbare Flüssigkeit, insbesondere Wasser, verwendet, und mit einem mindestens ein Wärmetauschfluid verwendenden Wärmetauschsystem zur Aufheizung des Arbeitsmittels, wobei der Arbeitsfluidkreislauf einen den Absorberfeststoff enthaltenden Sorptionsspeicher (10), der Ein- und Auslass (42, 44) für das jeweils in dampfförmigem Zustand befindliche Arbeitsfluid, eine zum Austreiben des Arbeitsfluids aus dem Absorberfeststoff dienende Heizvorrichtung (16) und ein zur Wärmeentnahme dienendes Wärmetauschelement enthält, sowie im Kreislauf des Arbeitsfluids nacheinander einen dem Auslass (44) für das in dampfförmigem Zustand befindliche Arbeitsfluid des Sorptionsspeichers (10) nachgeschalteten, das Arbeitsfluid verflüssigenden Kondensator (48), ein Vorratsgefäss (52) für das in flüssigem Zustand befindliche Arbeitsfluid und einen eine Einlassleitung (60) mit Einspeisungsvorrichtung (62) für das in flüssigem Zustand befindliche Arbeitsfluid besitzenden Verdampfer (38) aufweist, der an den Einlass (42) des Sorptionsspeichers (10) angeschlossen ist, und wobei das Wärmetauschsystem eine Umwälzpumpe (70) für das Wärmetauschfluid sowie eine ausserhalb des Sorptionsspeichers angeordnete Wärmetauscheinrichtung zur Wärmezuführung aufweist, dadurch gekennzeichnet, dass das Arbeitsfluid des Arbeitsfluidkreislaufes zugleich als ein Wärmetauschfluid des Wärmetauschsystems vorgesehen ist, dass der Verdampfer (38) ein Umlaufverdampfer ist, der eine Verdampferkammer (40) aufweist, in der ein Flüssigkeitssprühkopf (64) angeordnet ist, dessen versprühte Flüssigkeit teilweise in den dampfförmigen Zustand überführt wird und in diesem Zustand als das Arbeitsfluid mit dem Absorberfeststoff des Sorptionsspeichers (10) über dessen Einlass (42) frei kommuniziert, während die beim Verdampfungsprozess abgekühlte Flüssigkeit als Wärmetauschfluid über eine Flüssigkeitsausgangsleitung (66) der Verdampferkammer (40) zu der Wärmetauscheinrichtung (78, 84, 92) geführt ist, dass diese Wärmetauscheinrichtung (78, 84, 92) ausgangsseitig mit einer Einlassleitung (88) eines Gefässes (56) verbunden ist, welches im Arbeitsfluidkreislauf vor der Einspeisungsvorrichtung (62) angeordnet ist, dass die Wärmetauscheinrichtung (78, 84, 92) einen von minderwertiger Wärmeenergie beaufschlagten Wärmetauscher (78) aufweist, und dass dem Verdampfer (10) eine mit höherwertiger Energie gespeiste Zusatzheizvorrichtung (84; 92; 106; 112) zugeordnet ist.

2. Speicherheizungsanlage nach Anspruch 1, dadurch gekennzeichnet, dass die Zusatzheizvorrichtung (84; 92; 106; 112) mindestens einen in die Wärmetauscheinrichtung (78, 84, 92) einbezogenen Wärmetauscher (84, 92) aufweist.

3. Speicherheizungsanlage nach Anspruch 2, dadurch gekennzeichnet, dass ein Wärmetauscher (92) in den Wärmeträgerkreislauf einer Zentralheizung eingeschaltet ist.

4. Speicherheizungsanlage nach einem der Ansprüche 1 bis 3, dadurch gekennzeichnet, dass die Zusatzheizvorrichtung (106, 112) mindestens eine in der Verdampferkammer (40) angeordnete Heizvorrichtung (106) bzw. ein Wärmetauschelement (112) für eine zusätzliche Verdampfung von im Verdampfer (36) befindlichem flüssigen Arbeitsfluid aufweist.

5. Speicherheizungsanlage nach einem der Ansprüche 1 bis 4, dadurch gekennzeichnet, dass das Vorratsgefäss (52) über ein Ventil (54), das durch den Flüssigkeitsstand im Gefäss (56) steuerbar ist, mit dem Gefäss (56) verbunden ist.

6. Speicherheizungsanlage nach einem der Ansprüche 1 bis 5, dadurch gekennzeichnet, dass das im flüssigen Zustand durch den Verdampfer (38) zirkulierende Arbeitsfluid ein dessen Gefrierpunkt herabsetzendes Mittel enthält.

7. Speicherheizungsanlage nach einem der Ansprüche 1 bis 6, dadurch gekennzeichnet, dass die im Sorptionsspeicher (10) enthaltene Heizvorrichtung (16) abschnittsweise einschaltbar ist.

## Claims

1. Storage heating installation having a working fluid circulation system based on the absorption circulation process, and using an absorbing solids substance, especially zeolite, and as working fluid a vapourisable liquid, especially water, and having a heat exchange system for heating the working material using at least one heat exchange fluid, wherein the working fluid circulation system has a sorption store (10) which contains the absorbing solids substance and which contains an inlet (42) and an outlet (44) for the working fluid while currently in the vapour state, a heating device (16) serving to drive off the working fluid from the absorbing solids substance, and a heat exchange element serving for heat removal, and also has in the working fluid circulation system following the outlet (44) for the working fluid while in its vapour state from the sorption store (10), in succession, a condenser (48) liquefying the working fluid, a storage vessel (52) for the working fluid in its liquid state, and an evaporator (38) connected to the inlet (42) of the sorption store (10), and having an inlet connection (60) with feed device (62) for the working fluid while in the liquid state, and wherein the heat exchange system has a circulation pump (70) for the heat exchange fluid and a heat exchange device to supply heat disposed exteriorly of the sorption store, characterised in that the working fluid of the working fluid circulation system also serves as heat exchange fluid for the heat exchange system, the evaporator (38) is a circulation vapouriser having an evaporation chamber (40) in which a liquid spray head (64) is disposed, the liquid spray from which is converted partly to the vapour state and in this state freely communicates as working fluid with the absorbing solids substance of the sorption store (10) by way of its inlet (42), whereas the liquid cooled by the evaporation process is conducted as heat exchange fluid by a liquid outlet connection (66) of the evaporation chamber (40) to the heat exchange means (78, 84, 92), the heat exchange means (78, 84, 92) has its outlet side connected with an inlet conduit (88) of a vessel (56) which is disposed in the working fluid circulation system before the feed device (62), the heat exchange means (78, 84, 92) has a heat exchanger (78) operated by low grade heat energy, and, the evaporator (10) has an auxiliary heating device (84; 92; 106; 112) fed with high grade energy associated with it.

2. Storage heating installation according to claim 1, characterised in that the auxiliary heating device (84; 92; 106; 112) has at least one heat exchanger (84, 92) forming part of the heat exchange means (78, 84, 92).

3. Storage heating installation according to claim 2, characterised in that a heat exchanger (92) is included in the heat transmission circulation of a central heating system.

4. Storage heating installation according to one of claims 1 to 3, characterised in that the auxiliary heating device (106, 112) has at least one heating device (106) or heat exchange element (112) disposed in the evaporating chamber (40) for auxiliary evaporation of liquid working fluid present in the evaporator (36).

5. Storage heating installation according to one of claims 1 to 4, characterised in that the storage vessel (52) is connected with the vessel (56) by way of a valve (54) controlled by the liquid level in the vessel (56) itself.

6. Storage heating installation according to one of claims 1 to 5, characterised in that the working fluid which circulates through the evaporator (38) in the liquid state contains a substance which lowers its freezing point.

7. Storage heating installation according to one of claims 1 to 6, characterised in that the heating device (16) contained in the sorption store (10) can be connected up in sections.

## Revendications

1. Installation de chauffage par accumulation comportant un circuit de fluide de travail basé sur le processus de circuit à absorption qui emploie un produit absorbant, en particulier de la zéolithe et, comme fluide de travail, un liquide vaporisable, en particulier de l'eau, et comportant un système échangeur de chaleur, qui emploie au moins un fluide échangeur de chaleur, pour chauffer le fluide de travail, étant précisé que le circuit du fluide de travail contient un accumulateur par sorption (10) contenant un produit absorbant, l'entrée et la sortie (42, 44) pour le fluide de travail qui se trouve respectivement à l'état vapeur, un dispositif de chauffage (16) qui sert à expulser le fluide de travail hors du produit absorbant et un élément échangeur de chaleur qui sert à prélever la chaleur; et présente également, dans le circuit du fluide de travail, successivement, un condenseur (48), qui est monté en aval de la sortie (44) pour le fluide de travail, qui se trouve l'état vapeur, de l'accumulateur par sorption (10) et qui condense le fluide de travail, un réservoir (52) pour le fluide de travail qui se trouve à l'état liquide et un évaporateur (38) qui possède une conduite d'entrée (60) avec un dispositif d'alimentation (62) pour le fluide de travail se trouvant à l'état liquide et qui est relié à l'entrée (42) de l'accumulateur par sorption (10), et étant précisé que le système échangeur de chaleur présente une pompe de recyclage (70) pour le fluide échangeur de chaleur ainsi qu'un dispositif échangeur de chaleur, disposé à l'extérieur de l'accumulateur par sorption, pour amener de la chaleur, caractérisée en ce que le fluide de travail du circuit du fluide de travail est en même temps prévu comme fluide échangeur de chaleur du système échangeur de chaleur; en ce que l'évaporateur (38) est un évaporateur à recyclage qui présente une chambre d'évaporation (40) dans laquelle est disposée une tête de pulvérisation de liquide (64) dont le liquide pulvérisée est partiellement converti à l'état vapeur et, dans cet état, communique librement, en tant que fluide de travail, avec le produit absorbant de l'accumulateur par sorption (10) par l'intermédiaire de son entrée (42), tandis que le liquide, refroidi lors du processus d'évaporation, est amené, en tant que fluide échangeur de chaleur, par l'intermédiaire d'une conduite de sortie du liquide (66) de la chambre d'évaporation (40), au dispositif échangeur de chaleur (78, 84, 92); en ce que ce dispositif échangeur de chaleur (78, 84, 92) est relié, côté sortie, avec une conduite d'entrée (88) d'un réservoir (56) qui est disposé dans le circuit du fluide de travail en avant du dispositif d'alimentation (62); en ce que le dispositif échangeur de chaleur (78, 84, 92) présente un échangeur de chaleur (78) qui reçoit une énergie thermique de moindre valeur; et en ce qu'à l'évaporateur (10) correspond un dispositif de chauffage supplémentaire (84; 92; 106; 112) alimenté en énergie de haute valeur.

2. Installation de chauffage par accumulation selon la revendication 1, caractérisée en ce que le dispositif de chauffage supplémentaire (84; 92; 106; 112) présente au moins un échangeur de chaleur (84, 92) pris en compte dans le dispositif échangeur de chaleur (78, 84, 92).

3. Installation de chauffage par accumulation selon la revendication 2, caractérisée en ce qu'un échangeur de chaleur (92) est monté sur le circuit échangeur de chaleur d'un chauffage central.

4. Installation de chauffage par accumulation selon l'une des revendications 1 à 3, caractérisée en ce que le dispositif de chauffage supplémentaire (106, 112) présente au moins un dispositif de chauffage (106) ou un élément échangeur de chaleur (112) disposé dans la chambre d'évaporation (40) pour une évaporation supplémentaire du fluide de travail liquide qui se trouve dans l'évaporateur (36).

5. Installation de chauffage par accumulation selon l'une des revendications 1 à 4, caractérisée en ce que le réservoir (52) est relié avec le réservoir (56) par l'intermédiaire d'un robinet (54) qui peut être commandé par le niveau du liquide dans le réservoir (56).

6. Installation de chauffage par accumulation selon l'une des revendications 1 à 3, caractérisée en ce que le fluide de travail qui circule à l'état liquide dans l'évaporateur (38) contient un produit pour abaisser son point de congélation.

7. Installation de chauffage par accumulation selon l'une des revendications 1 à 6, caractérisée en ce que le dispositif de chauffage (16) contenu dans l'accumulateur par sorption (10) peut être mise en circuit par portions.